# EUROPÄISCHE PATENTSCHRIFT

(11) **EP 3 224 113 B1**
(45) Veröffentlichungstag und Bekanntmachung des Hinweises auf die Patenterteilung: **13.03.2019**
(21) Anmeldenummer: 15771895.8
(22) Anmeldetag: 22.09.2015
(51) Int. Cl.: B62D 1/185, B62D 1/16, B62D 1/20

(54) **LENKWELLE FÜR EIN KRAFTFAHRZEUG**
STEERING SHAFT FOR A MOTOR VEHICLE
ARBRE DE DIRECTION POUR VÉHICULE À MOTEUR

(30) Priorität: 28.11.2014 DE 102014017555
(43) Veröffentlichungstag der Anmeldung: 04.10.2017
(73) Patentinhaber: ThyssenKrupp Presta AG, 9492 Eschen (LI); thyssenkrupp AG, 45143 Essen (DE)
(72) Erfinder: MÜNTENER, Herbert, 9491 Ruggell (LI); GSTACH, Werner, 6820 Frastanz (AT)
(74) Vertreter: thyssenkrupp Intellectual Property GmbH
(86) Internationale Anmeldenummer: PCT/EP2015/071732
(87) Internationale Veröffentlichungsnummer: WO 2016/082970

(56) Entgegenhaltungen:
- EP-A2- 1 754 646
- DE-A1- 3 730 393
- DE-A1-102004 009 188
- JP-A- 2007 016 901
- JP-A- 2007 024 122
- JP-A- 2008 221 905
- JP-A- 2010 053 943
- JP-A- 2012 051 384
- US-A- 5 722 300

## Beschreibung

### Stand der Technik

Die Erfindung betrifft eine Lenkwelle für ein Kraftfahrzeug, umfassend eine als Hohlwelle ausgebildete äußere Welle und eine innere Welle, welche koaxial in der Hohlwelle ange-ordnet, relativ zur Hohlwelle in Richtung der Längsachse der Lenkwelle teleskopierbar, und über mindestens ein Formschlusselement drehmomentschlüssig mit der Hohlwelle verbunden ist, und umfassend eine Sicherungsvorrichtung mit zumindest einem Anschlagelement, welches an dem der inneren Welle zugewandten Endbereich der Hohlwelle angebracht ist und im Öffnungsquerschnitt der Hohlwelle angeordnete, der Hohlwelle in Richtung der Längsachse zugewandte Anschlagfläche hat, wobei das Anschlagelement mindestens ein Anschlussmittel aufweist, das von innen in dem Öffnungsquerschnitt an der inneren Manteloberfläche der äußeren Hohlwelle festlegbar ist, und ein Anschlussmittel zumindest ein von innen formschlüssig in eine in einer in-neren Manteloberfläche der äußeren Hohlwelle ausgebildete Ausnehmung einbringbares Befestigungselement aufweist.

Teleskopierbare Lenkwellen in Kraftfahrzeugen ermöglichen eine Verstellung der Lenksäule, wobei die Lenkradposition in Längsrichtung der Lenkwelle eingestellt werden kann. Außerdem kann die Lenkwelle im Fall eines Crashs zusammengeschoben werden, wodurch wirksam verhindert wird, dass die Lenksäule weiter in das Innere der Fahrgastzelle eindringt und zu Verletzungen der Insassen führt. Dies wird in der Regel durch die Bereitstellung zweier gegeneinander teleskopierbarer Wellen erreicht, nämlich einer äußeren Welle, die als Hohlwelle in Form eines rohrförmigen Hohlprofils ausgebildet ist, und einer darin in Richtung der Längsachse der Lenkwelle verschieblich gelagerten inneren Welle. Die innere Welle und die Hohlwelle bilden gemeinsam eine Lenkwelle, die durch teleskopierende Relativbewegung der Wellen entsprechend durch Zusammenschieben verkürzt oder durch Ausziehen verlängert werden kann. Die Übertragung des zur Lenkung eingebrachten Drehmoments erfolgt über drehmomentschlüssig, das heißt formschlüssig bezüglich einer Drehung um die Längsachse ineinander greifende Formschlusselemente, beispielsweise durch ein Mehrkantprofil der teleskopierenden Wellen oder auch zwischen den Wellen eingesetzte Formschlusselemente wie Wälzkörper oder dergleichen.

Eine teleskopierbare Lenkwelle wird als komplett montierte Baugruppe, bei der die innere Welle in der äußeren Welle gelagert, d.h. in deren Öffnungsquerschnitt eingeschoben ist, ausgeliefert und im Fahrzeug verbaut. Neben dem Normalbetrieb, in dem eine Lenksäule zur Einstellung der Lenkradposition kontrolliert innerhalb des vorgesehenen Verstellwegs verstellt wird, kann eine Lenkwelle bei einer Reparatur des Fahrzeugs, bei unsachgemäßer Handhabung oder beim Transport unkontrolliert in Richtung der Längsachse der Lenkwelle, d.h. in Längsrichtung auseinander gezogen werden, wobei die innere Welle aus der Hohlwelle vollständig herausgezogen und dadurch von der äußeren Welle getrennt wird. Bei einem sicherheitsrelevanten Bauteil wie einer Lenksäule muss eine derartige unbeabsichtigte Demontage, die zur Auftrennung des Lenkstrangs führt, auf jeden Fall sicher verhindert werden. Hierzu ist es bekannt, eine Sicherungsvorrichtung in Form einer Auszugsbegrenzungsvorrichtung vorzusehen, welche den Verstellweg der Teleskopierung begrenzt und ein Trennen von innerer und äußerer Welle ausschließt. Konkret wird hierzu im Öffnungsquerschnitt der Hohlwelle ein Anschlagelement angeordnet, welches eine Anschlagfläche hat, deren Flächennormale von der inneren Welle aus gesehen in Längsrichtung zur Hohlwelle, also in Einschubrichtung der inneren Welle zeigt. Die innere Welle kann an ihrem Ende einen Gegenanschlag aufweisen, mit einer Anschlagfläche, die gegen das Anschlagelement gerichtet ist, mit anderen Worten dessen Anschlagfläche bezüglich der Auszugsrichtung hintergreift.

Im Stand der Technik ist aus der CN201494492U eine Sicherungsvorrichtung, nämlich eine Auszugsbegrenzungsvorrichtung bekannt, die als Kappe ausgebildet ist, welche auf das zur inneren Welle gerichtete Ende der äußeren Hohlwelle aufgesteckt und bezüglich der Längsrichtung durch formschlüssigen Eingriff in eine in der Außenseite der Hohlwelle ausgebildete Befestigungsnut fixiert wird. Die Kappe hat einen Durchgang für die innere Welle, der kleiner ist als der Öffnungsquerschnitt der Hohlwelle. Dadurch wird von der Kappe in der teilweise von ihr überdeckten Öffnung der Hohlwelle ein Anschlagelement mit einer Anschlagfläche bereitgestellt, gegen die beim Herausziehen der inneren Welle ein mit der inneren Welle verbundener oder zusammenwirkender Gegenanschlag anschlägt und den Auszug begrenzt, beispielsweise ein am Ende der inneren Welle angeordneter Kopf oder Vorsprung, der im Querschnitt größer ist als der Durchgang der Kappe, oder auch ein zwischen innerer und äußerer Welle angeordnetes Formschlusselement wie eine Wälzkörperanordnung. Diese Kappe hat einen relativ aufwendigen mehrteiligen Aufbau und steht wegen der Befestigung auf der äußeren Oberfläche nach außen über den Außenquerschnitt der Hohlwelle vor, was bei der Montage nachteilig ist, oder erfordert eine aufwendige Bearbeitung der Außenwelle.

Eine ähnlich ausgebildete Sicherungsvorrichtung wird in der DE 10 2009 000 432 A1 beschrieben. Darin wird als Auszugsbegrenzungsvorrichtung ebenfalls eine Haltekappe vorgeschlagen, die in Formschlusselementen auf der Außenseite der äußeren Welle (Hohlwelle) fixiert wird. Auch diese Haltekappe ist mehrteilig ausgebildet und umgreift die Hohlwelle von außen. Dies erfordert eine entsprechende Bearbeitung und die Haltekappe steht über den Querschnitt der äußeren Welle nach außen vor, was die Handhabung bei der Montage erschwert.

Aus der JP 2010 053943 A ist ein Anschlagelement bekannt, dass alle Merkmale des Oberbegriffs des Anspruchs 1 offenbart, welches unter elastischer Verformung von innen formschlüssig in eine in einer inneren Manteloberfläche der äußeren Hohlwelle ausgebildete Ausnehmung einbringbar ist. Zur Montage muss das Anschlagelement elastisch verformt werden, und ermöglicht infolge dessen nur eine eingeschränkte Sicherung.

Nachteilig an den im Stand der Technik bekannten Sicherungsvorrichtungen ist die aufwendige Fertigung und die ungünstige Montierbarkeit.

Angesichts der vorangehend erläuterten Problematik ist es eine Aufgabe der vorliegenden Erfindung, eine verbesserte Lenkwelle anzugeben, die eine einfache und leicht montierbare Sicherungsvorrichtung zur Auszugssicherung umfasst, die sicher in der Hohlwelle fixierbar ist.

### Darstellung der Erfindung

Zur Lösung der vorgenannten Problematik wird erfindungsgemäß vorgeschlagen, dass das Befestigungselement ein Riegelelement aufweist, welches bezüglich der Richtung der Längsachse formschlüssig in eine Ausnehmung in dem Anschlusselement einsetzbar ist.

Die Erfindung sieht vor, dass das Befestigungselement ein Riegelelement aufweist, welches bezüglich der Richtung der Längsachse formschlüssig in eine Ausnehmung in dem Anschlusselement einsetzbar ist. Bei dieser Ausführung wird in dem Anschlusselement eine mit der Ausnehmung in der inneren Manteloberfläche der äußeren Hohlwelle korrespondierende Ausnehmung ausgebildet. Diese dient zur formschlüssigen Aufnahme eines Riegelelements, welches gleichermaßen formschlüssig in die entsprechende Ausnehmung in der Hohlwelle eingreift und somit für eine formschlüssige Fixierung des Anschlagelements und damit der Sicherungsvorrichtung in der Hohlwelle in Richtung der Längsachse der Lenkwelle sorgt.

Die praktische Realisierung kann einfach dadurch erfolgen, dass die Ausnehmung am Anschlagelement als zumindest teilweise außen um das Anschlusselement umlaufende Nut ausgebildet ist, und die Ausnehmung in der Öffnung der Hohlwelle als innen umlaufende Nut, die der Nut am Anschlagelement gegenüberliegt. Das Riegelelement kann als radial geschlitzter Feder- oder Sicherungsring (Seegerring) ausgebildet sein, welcher im radial zusammengedrückten, gespannten Zustand leicht auf dem Anschlusselement sitzend in die Öffnung der Hohlwelle eingeführt werden kann, und im entspanntem Zustand in die beiden gegenüberliegenden Nuten eintaucht, so dass die Nuten bezüglich eine Relativbewegung in Richtung der Längsachse der Lenkwelle formschlüssig fixiert sind. Vorteilhaft bei dieser Ausführungsform ist die besonders einfache mögliche Form des Anschlagelements und die Verwendung von kostengünstigen Standard-Federringen. Weiterhin ist es vorteilhaft, dass die formschlüssige Fixierung unabhängig von der Elastizität des Materials des bevorzugt einstückigen Grundkörpers des Anschlagelements erfolgt, der zudem eine einfachere und leichter herstellbare Grundform ohne integrierte elastische Elemente haben kann. Der Sicherheit kommt zugute, dass ein durch ein Riegelelement gesichertes Anschlagelement praktisch nicht zerstörungsfrei demontiert werden kann, so dass Beschädigungen leicht erkannt werden können.

Eine Besonderheit der Erfindung ist, dass das Anschlagelement von innen, das heißt an der inneren Mantelfläche der äußeren Hohlwelle befestigt ist. Die Befestigung erfolgt durch ein Anschlussmittel, welches in der Öffnung von innen an der Hohlwelle anbringbar ist, so dass das Anschlagelement in Richtung der Längsachse sicher in der Hohlwelle fixiert ist. Das oder die Anschlussmittel können beispielsweise an einem Abschnitt der Sicherungsvorrichtung ausgebildet sein, der sich zapfenartig in Richtung der Längsachse der Lenkwelle erstreckt und im Querschnitt so gestaltet ist, dass er in das offene Ende der äußeren Hohlwelle eingesteckt werden kann, bevorzugt formschlüssig in das Öffnungsprofil.

Ein wesentlicher Vorteil der Erfindung ist, dass das Anschlagelement geschützt innerhalb der äußeren Hohlwelle untergebracht ist. Insbesondere ist keine über den Außenquerschnitt der Hohlwelle vorstehende Kappe oder dergleichen wie im Stand der Technik vorhanden, so dass die Handhabung einer Lenksäule bei der Montage verbessert wird. Durch die Befestigung im Inneren der Hohlwelle ist das Anschlagelement besser gegen unbeabsichtigte Demontage gesichert, wodurch die Zuverlässigkeit der Sicherungsvorrichtung erhöht wird.

Die erfindungsgemäße Sicherungsvorrichtung kann mit geringem Aufwand gefertigt werden. Das Anschlagelement kann als eine Art Stopfen mit einem Kopplungsabschnitt ausgebildet sein, dessen Außenkontur mit der Innenkontur der äußeren Hohlwelle korrespondiert. Zur Montage wird der Kopplungsabschnitt einfach in Längsrichtung der Lenkwelle in die Öffnung der Hohlwelle eingesteckt und fixiert.

Besonders vorteilhaft ist es, dass das Anschlussmittel zumindest ein von innen formschlüssig in eine in einer inneren Manteloberfläche der äußeren Hohlwelle ausgebildete Ausnehmung einbringbares Befestigungselement aufweist. Ein derartiges Befestigungselement kann auf der äußeren Manteloberfläche des Anschlagelements angeordnet sein, wo es gegen die innere Manteloberfläche der Hohlwelle gerichtet ist. Die innere Manteloberfläche kann in diesem Bereich eine Ausnehmung in Form einer Vertiefung, Nut, Öffnung oder Hinterschneidung bezüglich der Längsrichtung aufweisen, in welche das über den inneren Öffnungsquerschnitt der Hohlwelle vorstehende Befestigungselement formschlüssig eingreift. Durch den Formschluss in Richtung der Längsachse der Lenkwelle wird eine sichere Fixierung des Anschlagelements innerhalb der Hohlwelle erreicht. Dabei kann die Ausgestaltung der Hohlwelle mit einer Ausnehmung in ihrem Endbereich fertigungstechnisch einfach erfolgen. Dadurch, dass sich das mindestens eine Befestigungselement im montierten Zustand innerhalb der Hohlwelle befindet, ist es besonders gut gegen unbeabsichtigtes Lösen geschützt, wodurch die Zuverlässigkeit der Sicherungsvorrichtung erhöht wird.

Eine vorteilhafte nicht beanspruchte Ausführungsform sieht vor, dass das Befestigungselement eine Rastnase aufweist. Eine Rastnase wird gebildet durch ein federnd an dem Anschlagelement angebrachtes Formschlusselement, welches mit einer Ausnehmung in der inneren Manteloberfläche der Hohlwelle korrespondiert. In entspannten Zustand steht das Formschlusselement nach außen über den inneren Öffnungsquerschnitt der Hohlwelle vor. Entgegen der Federkraft kann es nach innen verlagert werden, so dass es nicht mehr über den Öffnungsquerschnitt vorsteht und das Anschlagelement in die Öffnung der Hohlwelle eingeführt werden kann. Beim Erreichen der Ausnehmung rastet es durch die Federkraft formschlüssig in diese ein und verriegelt das Anschlagelement innerhalb der Öffnung der Hohlwelle. Besonders bevorzugt ist eine Rastnase widerhakenartig ausgebildet mit einer entgegen der Einsetzrichtung bezüglich des Öffnungsquerschnitts nach außen ansteigenden Einführungsschräge, an die sich eine bezüglich der Längsachse senkrecht abfallende Sperrfläche anschließt, welche für eine Verriegelung in der Ausnehmung sorgt. Bei einer derartigen Ausbildung der Rastnase kann die Montage einfach dadurch erfolgen, dass das Anschlagelement in die Öffnung der äußeren Hohlwelle eigesteckt wird, wobei die Rastnase durch die Einführungsschräge selbsttätig elastisch gespannt wird und beim Erreichen der Halteposition in die Ausnehmung einschnappt.

Für eine einfache Fertigung ist es vorteilhaft, dass eine Rastnase einstückig mit dem Anschlagelement ausgebildet ist. Dabei kann die federnde Ausgestaltung durch eine elastisch biegbare Zunge aus dem Material des Anschlagelements erfolgen, an deren freien Ende ein Formschlusselement angeformt ist. Eine derartige einstückige Fertigung kann beispielsweise im Kunststoff-Spritzguss realisiert werden, unter Umständen auch als metallisches Umform- oder Sinterteil.

Eine besonders bevorzugte Ausführungsform der Erfindung sieht vor, dass das Anschlussmittel zumindest ein drehmomentschlüssig in den Öffnungsquerschnitt der äußeren Hohlwelle einsetzbares Anschlusselement aufweist und das Anschlagelement eine Durchgangsöffnung aufweist, in der die innere Welle drehmomentschlüssig bezüglich Drehung um die Längsachse der Lenkwelle anbringbar ist. Durch diese Ausgestaltung erhält die erfindungsgemäße Sicherungsvorrichtung neben der Funktion als Auszugsbegrenzungsvorrichtung eine weitere wesentliche Sicherungsfunktion, nämlich eine redundante Drehmomentkopplung zwischen innerer Welle und äußerer Hohlwelle. Dies wird dadurch erreicht, dass zum einen die innere Welle formschlüssig bezüglich einer Drehung, d.h. drehmomentschlüssig, um die Längsachse der Lenkwelle mit dem Anschlagelement verbunden ist, welches selbst wiederum formschlüssig bezüglich einer Drehung, d.h. drehmomentschlüssig um die Längsachse der Lenkwelle mit der äußeren Hohlwelle verbunden ist. Das Anschlagelement bewirkt dadurch eine drehfeste Verbindung der Inneren Welle mit der äußeren Hohlwelle, es fungiert praktisch als starre Kupplung. Dadurch wird eine Ersatzkupplung bereitgestellt für den Fall, dass die primär in der Lenkwelle zur Übertragung des Lenk-Drehmoments eingesetzten Formschlusselemente ausfallen, beispielsweise beim Bruch von Wälzkörpern in linear wälzgelagerten Lenkwellen. Somit wird der Sicherheitsstandard einer Lenksäule durch ein erfindungsgemäßes Anschlagelement ohne zusätzlichen Aufwand in vorteilhafter Weise erhöht.

Die drehmomentschlüssige Verbindung kann dadurch realisiert werden, dass sowohl die Öffnung der Hohlwelle und das darin eingeführte Anschlagelement einen korrespondierenden, in Richtung der Längsachse durchgehenden Profilquerschnitt, beispielsweise eine viereckige - bevorzugt quadratische - drei-, sechs- oder achteckige Mehrkant-Grundform haben. Entsprechend ist die Durchgangsöffnung in dem Anschlagelement an den Profilquerschnitt der inneren Welle angepasst, die beispielsweise ebenfalls als Mehrkant ausgebildet sein kann. Vorzugsweise stimmt die Grundform des Profilquerschnitts bei der inneren und äußeren Welle überein, dies ist jedoch nicht zwingend erforderlich. Alternativ zu einem Mehrkantprofil können auch ineinander einschiebbare Längsverzahnungen oder dergleichen als drehmomentübertragende Elemente vorgesehen sein.

Ein in erster Linie als Auszugsbegrenzungsvorrichtung dienendes nicht beanspruchtes Anschlagelement kann als Kunststoff-Formteil ausgebildet sein, beispielsweise als einstückiges Spritzgussteil. Durch die Verwendung geeigneter Kunststoffmaterialien und die erfindungsgemäße, geschützte Anordnung und Fixierung wird bereits ein hoher Sicherheitsstandard erreicht. Soll die zusätzliche Funktion als Ersatzkupplung zur redundanten Übertragung des Lenkungs-Drehmoments optimiert werden, können für das Anschlagelement neben hochfesten, gefüllten Kunststoffen metallische Materialien eingesetzt werden, beispielsweise als metallische Guss-, Umform- oder Sinterteile. Zur Erreichung besonders angepasster Eigenschaften können unterschiedliche Metall- und Kunststoffmaterialien miteinander kombiniert werden, beispielsweise für gute Gleiteigenschaften bei hoher Festigkeit.

Bevorzugt ist in der Durchgangsöffnung ein entlang ihrer Innenkontur umlaufendes Dichtungselement angeordnet. Die Dichtung liegt an der äußeren Manteloberfläche der in der Durchgangsöffnung verschiebbar gelagerten inneren Welle und schützt die Lenkwelle vor dem Eindringen von Verunreinigungen, Fremdkörpern und Feuchtigkeit.

In einer vorteilhaften Weiterbildung umfasst das Anschlagelement ein Abdeckelement, welches über den Öffnungsquerschnitt der äußeren Hohlwelle hinausgeht und eine axiale Stützfläche aufweist, die gegen eine axiale Stirnseite der äußeren Hohlwelle abstützbar ist. Das Abdeckelement bildet eine Art Kopf des erfindungsgemäßen Anschlagelements, der nicht in die Öffnung der Hohlwelle einführbar ist, sondern axial mit einer - bevorzugt umlaufenden Stützfläche - auf dem stirnseitigen Axialfläche am Ende der Hohlwelle anliegt. Das Abdeckelement kann als Einschubbegrenzung für das erfindungsgemäße Anschlagelement und als weicher Axialanschlag dienen, der an der Gabel am freien Ende der inneren Welle anschlägt, wenn die Lenkwelle vollständig eingeschoben ist

Das Anschlussmittel und das Abdeckelement können einstückig ausgebildet sein, beispielsweise als Spritzgussteil aus Kunststoff.

Eine vorteilhafte Ausführungsform der Erfindung sieht vor, dass zwischen der inneren Welle und der äußeren Welle mindestens ein Wälzkörper angeordnet ist, der auf der äußeren Mantelfläche der inneren Welle und der inneren Mantelfläche der äußeren Welle abrollbar ist. Dadurch wird eine bezüglich ihrer Verstellbewegung in Längsrichtung linear wälzgelagerte Lenkwelle realisiert. Die Wälzkörper dienen dabei als Formschlusselemente zur Übertragung des Drehmoments zwischen der inneren und äußeren Welle. Bei einer Relativbewegung der Wellen bewegt sich der Wälzkörper ebenfalls in Längsrichtung und kann zur Begrenzung des Auszugs am erfindungsgemäßen Anschlagelement anschlagen. Wird der mindestens eine Wälzkörper in einem Wälzkörperkäfig gehalten, kann dieser eine gegen das Anschlagelement bewegbare Gegenfläche aufweisen. Dabei handelt es sich um die am Anschlusselement ausgebildete axiale Anschlagfläche.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer Lenkwelle,
- Figur 2: einen Teil einer Lenkwelle gemäß Figur 1 in auseinander genommenem Zustand,
- Figur 3: eine Querschnittansicht einer Lenkwelle gemäß der vorangehenden Figuren,
- Figur 4: eine perspektivische Ansicht eines nicht beanspruchten Anschlagelements in einer ersten Ausführungsform,
- Figur 5: einen Querschnitt durch die äußere Hohlwelle gemäß Figur 1,
- Figur 6: einen Längsschnitt entlang der Längsachse der Lenkwelle gemäß Figur 1,
- Figur 7: eine perspektivische Detailansicht einer Lenkwelle in einer zweiten Ausführungsform,
- Figur 8: eine perspektivische Ansicht eines erfindungsgemäßen Anschlagelements in einer zweiten Ausführungsform in auseinandergenommenem Zustand,
- Figur 9: einen teilweisen Längsschnitt entlang der Längsachse der Lenkwelle gemäß Figur 7 in zusammengebautem Zustand,
- Figur 10: eine Querschnittansicht einer Lenkwelle wie in Figur 3 in einer zweiten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

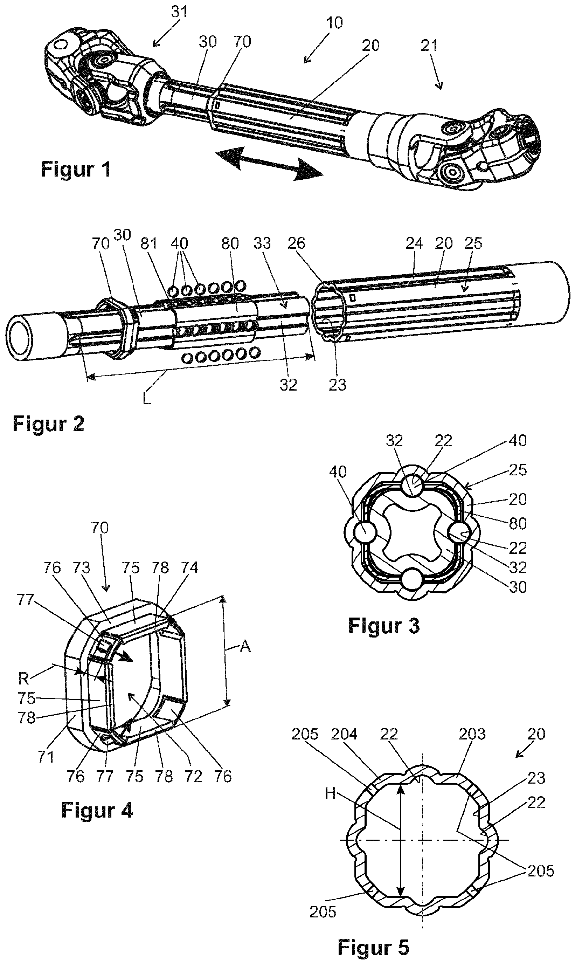

Figur 1 zeigt in perspektivischer Ansicht eine schematisch dargestellte Lenkwelle 10, die eine äußere Hohlwelle 20 und eine innere Hohlwelle 30 aufweist, die gegeneinander teleskopierbar sind in Richtung der Längsachse, d.h in der mit dem Doppelpfeil angedeuteten Längsrichtung.

Die äußere Hohlwelle 20 weist an ihrem freien Ende, welches bezüglich der inneren Welle 30 in Längsrichtung abgewandt ist, eine Gabel 21 auf, welche einen Teil eines Universalgelenks bildet, mit dem die Lenkwelle 10 momentschlüssig mit dem Lenkstrang verbunden ist. Entsprechend weist die innere Hohlwelle 30 an ihrem freien Ende, welches bezüglich der äußeren Welle 20 in Längsrichtung abgewandt ist, eine Gabel 31 auf, welche einen Teil eines weiteren Universalgelenks bildet, mit dem die Lenkwelle 10 momentschlüssig mit dem Lenkstrang verbunden ist. Die Hohlwellen 20 und 30 sind bevorzugt aus gut kaltumformbarem Stahl gefertigt.

In die Öffnung der äußeren Hohlwelle 20 ist eine in Richtung der Längsachse der Lenkwelle 10 ein nicht beanspruchtes Anschlagelement 70 eingesetzt. Die innere Welle 30 ist durch das Anschlagelement 70 verschiebbar hindurch geführt.

Figur 2 zeigt einen Teil der Lenkwelle 1 gemäß Figur 1 in einer Explosionsdarstellung, bei der die einzelnen Bestandteile in auseinander genommenem Zustand dargestellt sind. Daraus geht hervor, dass die äußere Hohlwelle 20 in ihrem der inneren Welle 30 zugewandten Bereich, in den die innere Welle 30 teleskopierend in Längsrichtung einschiebbar ist, profiliert ist. Die Profilierung der äußeren Welle 20 umfasst Nuten 22, die sich in der inneren Manteloberfläche 23 der äußeren Welle 20 in Längsrichtung erstrecken. Den Nuten 22 sind bezüglich der Wandung der Hohlwelle 20 außen gegenüberliegend konvex vorstehende wulstartige Ausformungen 24 in der äußeren Manteloberfläche 25 ausgebildet. In der dargestellten Ausführung sind sowohl die innere Welle 30 auch die äußere Hohlwelle 20 als Hohlprofile mit einer im wesentlichen quadratischen Querschnitts-Grundform ausgebildet. Dabei sind insgesamt vier Nuten 22 gleichmäßig über den Umfang der Hohlwelle 20 verteilt angeordnet, nämlich jeweils in der Mitte einer der Seiten des besagten quadratischen Querschnitts. Die Nuten 22 sind als Wälzkörperlaufbahnen, bzw. konkreter als Kugellaufbahnen ausgebildet.

Der Endabschnitt der inneren Hohlwelle 30, welcher der äußeren Hohlwelle 20 zugewandt und in diese teleskopierend einschiebbar ist, wie in Figur 1 dargestellt, ist ebenfalls profiliert. Die Profilierung umfasst Nuten 32, die sich von dem in die äußere Hohlwelle 20 einsteckbaren Ende in der äußeren Manteloberfläche 33 der Hohlwelle 30 in Längsrichtung über eine Länge L erstrecken. Die Länge L erstreckt sich über den Teilabschnitt der inneren Hohlwelle 30, der in die äußere Hohlwelle 20 in Längsrichtung einsteckbar ist.

Aus Figur 2 ist in der Zusammenschau mit der Querschnittsdarstellung in Figur 3 gut erkennbar, wie radial zwischen den Nuten 22 und 32 Wälzkörper, nämlich Kugeln 40, angeordnet sind. Jeweils eine Mehrzahl von Kugeln 40 sind in Längsrichtung mit hintereinander in den Nuten 22 und 32 angeordnet. Dabei werden sie in einer als Wälzkörper- bzw. Kugelkäfig 80 ausgebildeten Hülse 80 frei drehbar, mit definiertem Abstand relativ zueinander gehalten. Gleichzeitig sorgt die Hülse 80 dafür, dass in Umfangsrichtung benachbarte Kugeln 40 bezüglich der Längsrichtung jeweils in der gleichen Position bleiben.

Die in Figur 3 gezeigte Ausführung zeigt einen viereckigen, konkret einen quadratischen Grundquerschnitt der Hohlwellen 20 und 30. Die Nuten 22 und 32 sind symmetrisch jeweils mittig in einer Seite des Quadrats angeordnet.

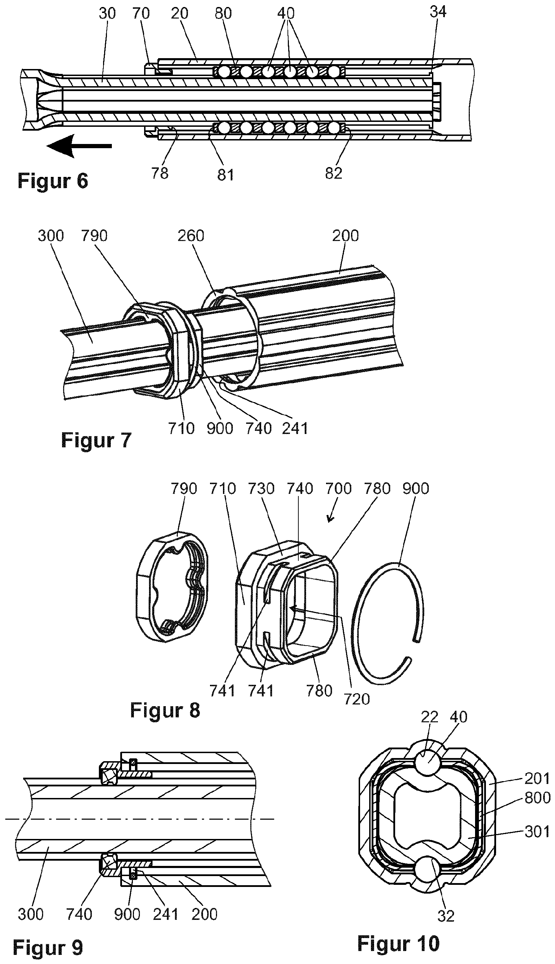

Eine ähnliche, weitere Ausführungsform ist wie in der Darstellung von Figur 3 in Figur 10 gezeigt. Im Unterschied zur ersten Ausführung weist diese nur insgesamt zwei Reihen von Kugeln 40 auf, die zwischen einer äußeren Hohlwelle 201 und einer inneren Hohlwelle 301 in Nuten 22 und 32 abwälzen, die sich symmetrisch auf zwei gegenüberliegenden Seiten des Quadrats befinden. Die Kugeln 40 werden in einer angepassten Hülse 800 geführt. In dieser Ausführungsform können alle Ausführungsformen für das Anschlagelement 70 oder 700 eingesetzt werden.

Figur 4 zeigt ein nicht beanspruchtes Anschlagelement 70 in perspektivischer Ansicht, und zwar schräg aus Richtung der Hohlwelle 20 gesehen. Die Grundform des Anschlagelements 70 ist quadratisch entsprechend dem Querschnitt der Hohlwelle 20, wie er in Figur 5 dargestellt ist.

Das Anschlagelement 70 weist ein rahmenförmiges Abdeckelement 71 auf, mit einer Durchgangsöffnung 72 und einer axialen Stützfläche 73. Von der Stützfläche 73 erstreckt sich in Richtung der Längsachse - in der dargestellten Ansicht nach rechts unten auf den Betrachter zu - ein Anschlusselement 74 mit insgesamt vier, jeweils paarweise parallel zu den Seiten 203 des quadratischen Querschnitts gegenüberliegenden Anschlussmitteln 75. In den Eckbereichen des Quadrats sind zwischen den Anschlussmittel 75 zungenartige Befestigungselemente 76 mit Rastnasen 77 angeordnet. Die Rastnasen 77 haben einen Abstand R von der axialen Stützfläche 73 in Richtung der Längsachse. Die Befestigungselemente 76 sind elastisch federnd ausgebildet, so dass die darauf angeordneten Rastnasen 77 nach innen in den Querschnitt der Durchgangsöffnung 72 einfedern können, was mit dem kleinen Pfeil angedeutet ist.

Auf ihren dem Betrachter zugewandten Stirnseiten sind an den Anschlussmitteln 75 Anschlagflächen 78 ausgebildet.

Der Abstand A der Außenseiten der Anschlussmittel 75 ist geringfügig kleiner als der Innenabstand H zwischen den einander gegenüberliegenden Seiten 203 der Hohlwelle 20. Das Gleiche gilt für den Außenabstand der Befestigungselemente 76, der geringfügig kleiner ist als der Innenabstand zwischen den Eckbereichen 204 der Hohlwelle 20. Dadurch ist es möglich, das Anschlagelement 70 mit dem Anschlusselement 74 in die Öffnung der Hohlwelle 20 in Richtung der Längsachse der Lenkwelle 10 einzuführen.

Dadurch, dass die Rastnasen 77 in dargestellten entspannten Zustand über den Öffnungsquerschnitt der Hohlwelle 20 vorstehen, werden sie beim Einführen zunächst federnd nach innen gedrückt. In die innere Mantelfläche 23 der Hohlwelle 20 sind in den Eckbereichen 204 im Abstand R von der Stirnseite 26 Ausnehmungen 205 eingebracht. Diese Ausnehmungen 205 können besonders bevorzugt als ausgestanzte Durchbrüche, oder aber auch als nutartige Vertiefungen, ausgebildet sein, die in Form und Abmessungen mit den besagten Rastnasen 77 korrespondieren. Sobald die Rastnasen 77 beim Einführen die Ausnehmungen erreichen, werden sie durch die wirkende Federkraft nach außen bewegt und schnappen formschlüssig in die Ausnehmungen 205 ein. In diesem eingesetzten Zustand liegt das Abdeckelement 70 mit seiner Stützfläche 73 auf der Stirnseite 26 der Hohlwelle 20 auf.

Wie Figur 1 und der Schnittdarstellung von Figur 6 entnehmbar ist, steht das Abdeckelement 70 nicht nach außen über den Außenquerschnitt der Hohlwelle 20 vor.

Der Umfangsquerschnitt des Anschlusselements 74, der im Wesentlichen durch die Anschlussmittel 75 und die Befestigungselemente 76 begrenzt wird, greift beim Einsetzen bezüglich einer Drehung um die Längsachse formschlüssig, oder anders ausgedrückt drehmomentschlüssig, in den Öffnungsquerschnitt der Hohlwelle 20 ein. Dadurch, dass der äußere Querschnitt der inneren Welle 30 beim Zusammenbau der Lenkwelle 10 bezüglich einer Drehung um die Längsachse ebenfalls formschlüssig, oder anders ausgedrückt drehmomentschlüssig, in die Durchgangsöffnung 72 des Anschlusselements 74 eingreift, bewirkt das Anschlusselement 74 eine drehstarre Kopplung zwischen innerer Welle 30 und äußerer Hohlwelle 20.

In der Schnittdarstellung von Figur 6 ist gut erkennbar, wie beim Auszug der inneren Welle 30 aus der Hohlwelle 20 in Pfeilrichtung der Wälzkörperkäfig 80 mit einer Anschlagfläche 81 gegen die Anschlagfläche 78 am Anschlagelement 70 anschlägt und den Auszug wirksam begrenzt. Es ist ebenfalls denkbar, an dem in die Hohlwelle 20 eintauchendem Ende der inneren Welle 30 einen Anschlag 34 anzubringen, der über das Querschnittsprofil der inneren Welle 30 vorsteht und beim Herausziehen gegen eine weitere Anschlagfläche 82 am Wälzkörperkäfig 80anschlägt.

Eine zweite Ausführungsform eines erfindungsgemäßen Anschlagelements 700 ist in den Figuren 7, 8 und 9 dargestellt. Es umfasst ein Abdeckelement 710 (Kopf), an den sich ein Anschlusselement 740 anschließt, welches die Form eines Mehrkantrohr-Stutzens mit einer Durchgangsöffnung 720 hat. Dieser ist hinsichtlich Form und Abmessungen so gestaltet, dass er bezüglich einer Drehung um die Längsachse formschlüssig, oder anders ausgedrückt drehmomentschlüssig, in den Öffnungsquerschnitt einer Hohlwelle 200 einsetzbar ist.

In dem Anschlusselement 740 ist eine zumindest abschnittsweise umlaufende Nut 741 eingebracht, die einen Abstand zur axialen Stützfläche 730 hat. In demselben Abstand ist in die innere Manteloberfläche der Hohlwelle 200 eine Nut 241 eingebracht. In eingesetztem Zustand, wenn das Anschlagelement 700 mit der Stützfläche 730 an der Stirnseite 260 der Hohlwelle 200 anliegt, liegen sich die Nuten 241 und 741 mit ihren Nutöffnungen radial gegenüber.

In die Nut 741 kann ein geschlitzter Federring 900 eingelegt werden, und durch radiales Zusammendrücken so weit im Umfang verkleinert werden, dass das Anschlusselement 740 samt gespanntem Federring 900 in die Öffnung der Hohlwelle 200 eingeführt werden kann. Kommt die Nut 741 beim weiteren Einführen mit der Nut 241 zur Deckung, entspannt sich der Federring 900 in radialer Richtung und greift gleichzeitig in die Nuten 241 und 741 formschlüssig ein. Dadurch ist das Anschlagelement 700 formschlüssig in der Hohlwelle 200 gegen Herausziehen verriegelt. Damit ist die Anschlagfläche 780 in Richtung der Längsachse axial sicher fixiert.

Die bezüglich einer Drehung um die Längsachse formschlüssige, oder anders ausgedrückt drehmomentschlüssige Verbindung der inneren Welle 300 mit der äußeren Welle 200 durch das Anschlagelement 700 erfolgt analog zu der oben zum Anschlagelement 70 gegebenen Erläuterung.

Zur Abdichtung der Lenkwelle 10 gegen das Eindringen von Fremdkörpern und Feuchtigkeit kann an dem Anschlagelement 700 oder 70 ein Dichtungselement 790 angebracht sein. Dieses kann wie in Figur 9 gezeigt von außen in das Anschlagelement 700 eingesetzt sein. Mit seiner Innenseite umgreift es die innere Welle 300 an der Querschnittskontur abdichtend.

**Bezugszeichenliste**

| | | | |
|---|---|---|---|
| 10 | Lenkwelle | 34 | Anschlag |
| 20, 200 | äußere Hohlwelle | 40 | Kugel |
| 201 | äußere Hohlwelle | 70, 700 | Anschlagelement |
| 21 | Gabel | 71, 710 | Abdeckelement |
| 22 | Nut | 72, 720 | Durchgangsöffnung |
| 23 | innere Manteloberfläche | 73, 730 | Stützfläche |
| 24 | Ausformungen | 74, 740 | Anschlusselement |
| 241 | Nut | 741 | Nut |
| 25 | äußere Manteloberfläche | 75 | Anschlussmittel |
| 203 | Seite des quadratischen Querschnitts | 76 | Befestigungselement |
| 204 | Eckbereich | 77 | Rastnasen |
| 205 | Ausnehmung | 78, 780 | Anschlagfläche |
| 26, 260 | Stirnseite | 80, 800 | Wälzkörperkäfig (Hülse) |
| 30, 300 | innere Hohlwelle | 81, 82 | Anschlagfläche |
| 301 | innere Hohlwelle | 900 | Federring |
| 31 | Gabel | R | Abstand 73-77 |
| 32 | Nut | A | Abstand |
| 33 | äußere Manteloberfläche | H | Innenabstand |

## Patentansprüche

1. Lenkwelle (10) für ein Kraftfahrzeug, umfassend eine als Hohlwelle (20) ausgebildete äußere Welle und eine innere Welle (30), welche koaxial in der Hohlwelle (20) angeordnet, relativ zur Hohlwelle (20) in Richtung der Längsachse der Lenkwelle (10) teleskopierbar, und über mindestens ein Formschlusselement (40) drehmomentschlüssig mit der Hohlwelle (20) verbunden ist,
und umfassend eine Sicherungsvorrichtung mit zumindest einem Anschlagelement (700), welches an dem der inneren Welle (30, 300) zugewandten Endbereich der Hohlwelle (20, 200) angebracht ist und im Öffnungsquerschnitt der Hohlwelle (20, 200) angeordnete, der Hohlwelle (20, 200) in Richtung der Längsachse zugewandte Anschlagfläche (78, 780) hat,
wobei das Anschlagelement (700) mindestens ein Anschlusselement (741) aufweist, das von innen in dem Öffnungsquerschnitt an der inneren Manteloberfläche (23) der äußeren Hohlwelle (20, 200) festlegbar ist, und ein Anschlusselement (740) zumindest ein von innen formschlüssig in eine in einer inneren Manteloberfläche (23) der äußeren Hohlwelle (20, 200) ausgebildete Ausnehmung (205) einbringbares Befestigungselement (900) aufweist, **dadurch gekennzeichnet,**
**dass** das Befestigungselement ein Riegelelement (900) aufweist, welches bezüglich der Richtung der Längsachse formschlüssig in eine Ausnehmung (741) in dem Anschlusselement (740) einsetzbar ist.

2. Lenkwelle nach einem der vorhergehenden Ansprüche, **dadurch gekennzeichnet, dass** das Anschlusselement (740) zumindest ein drehmomentschlüssig in den Öffnungsquerschnitt der äußeren Hohlwelle (20, 200) einsetzbares Anschlusselement (740) aufweist und das Anschlagelement (700) eine Durchgangsöffnung (720) aufweist, in der die innere Welle (30, 300) drehmomentschlüssig bezüglich Drehung um die Längsachse der Lenkwelle (10) anbringbar ist.

3. Lenkwelle nach Anspruch 2, **dadurch gekennzeichnet, dass** in der Durchgangsöffnung (720) eine entlang ihrer Innenkontur umlaufendes Dichtungselement (790) angeordnet ist.

4. Lenkwelle nach einem der vorhergehenden Ansprüche, **dadurch gekennzeichnet, dass** das Anschlagelement (700) ein Abdeckelement (710) umfasst, welches über den Öffnungsquerschnitt der äußeren Hohlwelle (20, 200) hinausgeht und eine axiale Stützfläche (730) aufweist, die gegen eine axiale Stirnseite (26, 260) der äußeren Hohlwelle (20, 200) abstützbar ist.

5. Lenkwelle nach Anspruch 4, **dadurch gekennzeichnet, dass** das Anschlusselement (740) und das Abdeckelement (710) einstückig ausgebildet sind.

6. Lenkwelle nach einem der vorhergehenden Ansprüche, **dadurch gekennzeichnet, dass** zwischen der inneren Welle (30) und der äußeren Welle (20) mindestens ein Wälzkörper (40) angeordnet ist, der auf der äußeren Manteloberfläche (33) der inneren Welle (30) und der inneren Manteloberfläche (23) der äußeren Welle (20) abrollbar ist.

## Claims

1. Steering shaft (10) for a motor vehicle, comprising an outer shaft which is configured as a hollow shaft (20) and an inner shaft (30) which is arranged coaxially in the hollow shaft (20), can be telescoped relative to the hollow shaft (20) in the direction of the longitudinal axis of the steering shaft (10), and is connected to the hollow shaft (20) in a torque-transmitting manner via at least one positively locking element (40),
and comprising a securing apparatus with at least one stop element (700) which is attached on that end region of the hollow shaft (20, 200) which faces the inner shaft (30, 300), and has a stop face (78, 780) which is arranged in the opening cross section of the hollow shaft (20, 200) and faces the hollow shaft (20, 200) in the direction of the longitudinal axis,
wherein the stop element (700) comprises at least one connector element (741) which can be fixed from the inside in the opening cross section on the inner circumferential surface (23) of the outer hollow shaft (20, 200), and a connector element (740) comprises at least one fastening element (900) which can be introduced from the inside in a positively locking manner into a recess (205) which is configured in an inner circumferential surface (23) of the outer hollow shaft (20, 200), **characterized**
**in that** the fastening element comprises a bolt element (900) which can be inserted into a recess (741) in the connector element (740) in a positively locking manner with regard to the direction of the longitudinal axis.

2. Steering shaft according to one of the preceding claims, **characterized in that** the connector element (740) comprises at least one connector element (740) which can be inserted in a torque-transmitting manner into the opening cross section of the outer hollow shaft (20, 200), and the stop element (700) comprises a through opening (720), in which the inner shaft (30, 300) can be attached in a torque-transmitting manner with regard to rotation about the longitudinal axis of the steering shaft (10).

3. Steering shaft according to Claim 2, **characterized in that** a seal element (790) which runs around along the inner contour of the through opening (72, 720) is arranged in said through opening (720) .

4. Steering shaft according to one of the preceding claims, **characterized in that** the stop element (700) comprises a covering element (710) which goes beyond the opening cross section of the outer hollow shaft (20, 200) and comprises an axial supporting face (730) which can be supported against an axial end side (26, 260) of the outer hollow shaft (20, 200).

5. Steering shaft according to Claim 4, **characterized in that** the connector element (740) and the covering element (710) are configured in one piece.

6. Steering shaft according to one of the preceding claims, **characterized in that** at least one rolling body (40) is arranged between the inner shaft (30) and the outer shaft (20), which rolling body (40) can roll on the outer circumferential surface (33) of the inner shaft (30) and the inner circumferential surface (23) of the outer shaft (20).

## Revendications

1. Colonne de direction (10) pour véhicule automobile, comprenant un arbre extérieur configuré comme arbre creux (20) et un arbre intérieur (30) disposé coaxialement dans l'arbre creux (20), télescopique par rapport à l'arbre creux (20) dans la direction de l'axe longitudinal de la colonne de direction (10) et relié en correspondance géométrique à l'arbre creux (20) par au moins un élément (40) de manière à pouvoir transmettre des couples de rotation, et comprenant un ensemble de blocage qui présente au moins un élément de butée (700) placé sur la partie d'extrémité de l'arbre creux (20, 200) tournée vers l'arbre intérieur (30, 300) et qui possède des surfaces de butée (78, 780) disposées dans la section transversale d'ouverture de l'arbre creux (20, 200) et orientées vers l'arbre creux (20, 200) dans la direction de l'axe longitudinal,
l'élément de butée (700) présentant au moins un élément de raccordement (741) qui peut être immobilisé de l'intérieur dans la section transversale d'ouverture sur la surface d'enveloppe intérieure (23) de l'arbre creux (20, 200) et
un élément de fermeture (740) présentant au moins un élément de fixation (900) qui peut être inséré dans une découpe (205) formée dans une surface d'enveloppe intérieure (23) de l'arbre creux (20, 200),
**caractérisé en ce que**
l'élément de fixation présente un élément de verrouillage (900) qui peut être inséré dans la direction de l'axe longitudinal en correspondance géométrique dans une découpe (741) de l'élément de raccordement (740).

2. Colonne de direction selon la revendication précédente, **caractérisée en ce que** l'élément de raccordement (740) présente au moins un élément de raccordement (740) qui peut être inséré de manière à transmettre un couple de rotation dans la section transversale d'ouverture de l'arbre creux (20, 200), le l'élément de butée (700) présentant une ouverture de passage (720) dans laquelle l'arbre intérieur (30, 300) peut être placé de manière à pouvoir transmettre un couple de rotation autour de l'axe longitudinal du colonne de direction (10).

3. Colonne de direction selon la revendication 2, **caractérisée en ce qu'**un élément d'étanchéité (790) est disposé dans l'ouverture de passage (720) et épouse son contour intérieur.

4. Colonne de direction selon l'une des revendications précédentes, **caractérisée en ce que** l'élément de butée (700) comporte un élément de recouvrement (710) qui déborde au-delà de la section transversale d'ouverture de l'arbre creux (20, 200) et qui présente une surface axiale d'appui (730) qui s'appuie sur un côté frontal axial (26, 260) de l'arbre creux (20, 200).

5. Colonne de direction selon la revendication 4, **caractérisé en ce que** l'élément de raccordement (740) et l'élément de recouvrement (710) sont formés d'une seule pièce.

6. Colonne de direction selon l'une des revendications précédentes, **caractérisée en ce qu'**au moins un corps de roulement (40) qui peut rouler sur la surface d'enveloppe extérieure (33) de l'arbre intérieur (30) et la surface intérieure d'enveloppe (23) de l'arbre extérieur (20) est disposé entre l'arbre intérieur (30) et l'arbre extérieur (20).
